**Europäisches Patentamt**

**European Patent Office**

**Office européen des brevets**

(19)

(11) Veröffentlichungsnummer: **0 143 202**
**B1**

(12) **EUROPÄISCHE PATENTSCHRIFT**

(45) Veröffentlichungstag der Patentschrift:
**01.06.88**

(21) Anmeldenummer: **84110293.2**

(22) Anmeldetag: **29.08.84**

(51) Int. Cl.⁴: **H 04 L 11/20,** H 04 Q 11/04

(54) **Digital-Telekommunikationssystem mit Sternstruktur seiner Anschlussleitungen.**

(30) Priorität: **01.09.83 DE 3331632**

(43) Veröffentlichungstag der Anmeldung:
**05.06.85 Patentblatt 85/23**

(45) Bekanntmachung des Hinweises auf die Patenterteilung:
**01.06.88 Patentblatt 88/22**

(84) Benannte Vertragsstaaten:
**AT BE CH DE FR GB IT LI NL SE**

(56) Entgegenhaltungen:
**EP - A - 0 059 149**
**FR - A - 2 503 497**
**US - A - 4 032 899**

**INTERNATIONAL SWITCHING SYMPOSIUM 7.-11. Mai 1979, Hotel PLM Saint Jacques, PARIS (FR). Seiten 757-764. Y. IKEDA et al.: "Virtual circuit switching system: a new system concept for telephony and data". INTERNATIONAL SWITCHING SYMPOSIUM 21.- 25. September 1981, MONTREAL (CA) Seiten 1-7. M. DEVAULT et al.: "Asynchronous time division switching: a new concept for ISDN nodes".**

(73) Patentinhaber: **Siemens Aktiengesellschaft Berlin und München, Wittelsbacherplatz 2, D-8000 München 2 (DE)**

(72) Erfinder: **Gerke, Peter, Dipl.-Ing., Schiltbergstrasse 1, D-8032 Gräfelfing (DE)**

## Beschreibung

In der neueren Telekommunikationstechnik, insbesondere in der Bürokommunikation, treten zwei in ihrer Charakteristik sehr unterschiedliche Kommunikationskategorien auf: Zum einen der sog. Stream-Verkehr mit dem Profil etwa des Fernsprechverkehrs mit Verbindungsdauern, in der Grössenordnung von Minuten, Bitraten etwa von 64 bzw. 160 kbit/s (je Übertragungsrichtung) und relativ geringer Verbindungshäufigkeit; zum anderen der sogenannte Burst-Verkehr mit Kommunikationsdauern in der Grössenordnung von Millisekunden, Bitraten etwa von 10 Mbit/s und grosser Verbindungshäufigkeit.

Dem Stream-Verkehr, wie er etwa zwischen Geräten zur Sprach-, Text- oder Bildkommunikation stattfindet, ist – insbesondere in Verbindung mit dem Prinzip der «zentralen Vermittlung» – das Prinzip der Kanalvermittlung adäquat, demzufolge unabhängig vom momentanen Kommunikationszustand ein verbindungsindividueller Übertragungskanal jeweils für die Dauer der betreffenden Verbindung durchgeschaltet wird. Dies erfordert entsprechende Verbindungsaufbau- und -abbauzeiten, die indessen bei einem Burst-Verkehr, wie er etwa zur Verbindung von Subsystemen der Daten- und Textverarbeitung stattfindet, nicht tragbar sind, weshalb hier – insbesondere in Verbindung mit dem Prinzip der «dezentralen Vermittlung» – das Prinzip der Vermittlung auf Anforderung zur Anwendung kommt: Die Nutzinformationspakete, die jeweils die Zieladresse unmittelbar mit sich führen, werden allen am Anschlussnetz angeschlossenen Einrichtungen zugeführt und nur von der von der jeweiligen Zieladresse bezeichneten Empfängereinrichtung aufgenommen.

Für die erste Kommunikationskategorie, d.h. für zentral kanalvermittelten Stream-Verkehr, ist das diensteintegrierende digitale Fernmeldenetz (ISDN) optimal geeignet, auf das neuere Entwicklungen der Telekommunikationstechnik auf dem Wege über ein digitalisiertes Fernsprechnetz abzielen. Für die zweite Kommunikationskategorie, d.h. für dezentral auf Anforderung vermittelten Burst-Verkehr, werden sog. Local Area Networks (LAN) vorgesehen.

Das zunehmende Interesse an Local Area Networks beruht dabei auf einigen Vorteilen des Prinzips der dezentralen Vermittlung auf Anforderung in digitalen «In-House»-Netzen, wie eines einstufigen Koppelverfahrens ohne Wegesuche, der Eignung für unterschiedliche Bitraten der angeschlossenen Geräte und der Eignung für Burst-Verkehr. Auf der anderen Seite erfordert die Einrichtung eines Local Area Networks in der Regel die Neuverlegung eines geeigneten Übertragungsmediums, wobei es eines entsprechend aufwendigen Zugriffsverfahrens zum Vermeiden von Mehrfachzugriffen zu dem für alle Benutzer gemeinsamen Übertragungsmedium bedarf; für digitale Sprachkommunikation ist ein solches Local Area Network mit dezentraler Vermittlung auf Anforderung dennoch vergleichsweise weniger geeignet wegen des teilnehmerindividuell relativ hohen Aufwandes sowie eines im allgemeinen zu geringen Datendurchsatzes und einer Beeinträchtigung der Kommunikationsqualität durch höhere Nachrichten-Laufzeiten.

Ebenso indessen, wie Telekommunikationssysteme mit dezentraler Vermittlung nicht auf das Prinzip der Vermittlung auf Anforderung beschränkt sind, sind auch Telekommunikationssysteme mit zentraler Vermittlung nicht auf das Prinzip der Kanalvermittlung fixiert. So ist beispielsweise auch schon (z.B. aus DE-A-27 30 772 oder aus BSTJ 62(1983)3, 631 ... 638) ein ein Sternnetz aufweisendes Fernmeldesystem bekannt, das eine zentrale Vermittlung nach Art einer Vermittlung auf Anforderung vorsieht, indem es z.B. (gemäss DE-A-27 30 772) innerhalb der Vermittlungsstelle die einzelnen Nutzinformationsworte jeweils zusammen mit der Zieladresse sukzessive teilnehmerindividuell vorgesehenen, ringförmig zusammengeschalteten Empfangs- bzw. Auswahleinrichtungen zuführt, wobei das betreffende Nutzinformationswort nur von der durch die jeweilige Zieladresse bezeichneten Empfangseinrichtung über die betreffende Teilnehmeranschlussleitung zum Ziel-Teilnehmer übertragen wird, oder indem z.B. (gemäss BSTJ 62(1983)3, 631 ... 638) mittels beim Vermittlungsknoten teilnehmerindividuell vorgesehener Interface-Schaltungen ein von einem Teilnehmer her ankommendes Paket nur dann zum Knoten hin, von dem aus sämtliche Teilnehmer ständig erreicht werden, durchgeschaltet wird, wenn der Knotenbus momentan frei ist.

Eine zentrale Vermittlung auf Anforderung nach Massgabe von in den Nachrichtenpaketen enthaltenen Adressen setzt entsprechende Nachrichtenpakete abgebende Telekommunikationsgeräte voraus, wie sie in Local Area Networks (LAN) üblich sind – eine Voraussetzung, die indessen bei in Telekommunikationssystemen mit zentraler Kanalvermittlung üblichen Telekommunikationsgeräten, wie z.B. gebräuchlichen Analog-oder auch Digital-Fernsprechgeräten, in aller Regel nicht erfüllt ist. Einen Einsatz solcher Telekommunikationsgeräte in einem Telekommunikationssystem mit zentraler Vermittlung auf Anforderung dennoch zu ermöglichen, zeigt die Erfindung einen Weg.

Die Erfindung betrifft ein Digital-Telekommunikationssystem mit Sternstruktur seiner Anschlussleitungen und mit zentraler Vermittlung auf Anforderung, unter Verwendung von den Zugriff der einzelnen Anschlussleitungen zu einem zentralen Telekommunikationskern regelnden, beim Telekommunikationskern teilnehmerindividuell vorgesehenen Zugriffssteuereinheiten; dieses Digital-Telekommunikationssystem ist erfindungsgemäss dadurch gekennzeichnet, dass an ein und denselben Telekommunikationskern sowohl Telekommunikationsgeräte für auf Anforderung vermittelten Burst-Verkehr als auch Telekommunikationsgeräte für kanalvermittelten Stream-Verkehr jeweils über eine eigene Anschlussleitung mit einer beim Telekommunikationskern anschlussleitungsindividuell vorgesehenen Zugriffssteuereinheit angeschlossen sind, wobei die den Telekommunikationsgeräten für Stream-Verkehr zugeordneten Zugriffssteuereinheiten zunächst den Zugang der jeweiligen Anschlussleitung zu einem Vermittlungsprozessor bewirken, der von dem Telekommunikationsgerät abgegebene Dienste- und Zielinformationen auswertet und die entsprechend umgewerteten Zielinformationen an die betreffende Zugriffssteuereinheit zurückgibt, woraufhin die Zugriffssteuereinheit den Zugang der betreffenden Anschlussleitung zu dem eigentlichen Telekommunikationskern bewirkt, über den die Verbindung dann nach Massgabe der umgewerteten Zielinformation vermittelt wird.

Die Erfindung bringt den Vorteil mit sich, in einem Telekommunikationssystem mit Sternstruktur seiner – vorzugsweise durch die symmetrischen Teilnehmeranschlussleitungen des vorhandenen Teilnehmeranschlussnetzes gebildeten – Anschlussleitungen und mit zentraler Vermittlung auf Anforderung sowohl von Haus aus für eine Vermittlung auf Anforderung eingerichtete Telekommunikationsgeräte als auch an sich für eine Kanalvermittlung eingerichtete Telekommunikationsgeräte vorsehen und damit beide Gerätearten in einem gemeinsamen Telekommunikationsnetz an einem gemeinsamen Telekommunikationskern betreiben zu können.

Dabei können um so mehr Telekommunikationsgeräte sowohl der einen als auch der anderen Art an dem gemeinsamen Telekommunikationskern betrieben werden, je leistungsfähiger dieser ist. Um dazu einen hohen Bitdurchsatz durch einen eine entsprechende Vielzahl von Anschlussleitungen zusammenfassenden Telekommunikationskern unter hinreichend sicherer Vermeidung von Mehrfachzugriffen zu dem eigentlichen Telekommunikationskern zu ermöglichen, können in Weiterbildung der Erfindung die Zugriffssteuereinheiten jeweils in Gruppen unterteilt den Zugang ihrer Anschlussleitungen zu wenigstens einem der betreffenden Gruppe von Zugriffssteuereinheiten gemeinsam zugeordneten, jeweils eine Mehrzahl von Wartefeld-Speicherzellen aufweisenden Wartefeld-Speicher regeln, wobei im Zuge eine zyklischen Abfrage der Wartefeld-Speicher über einen zyklisch betriebenen Koppelschalter jeweils eines der im jeweiligen Wartefeld-Speicher enthaltenen Pakete in eine zentrale Paketspeicherzelle übernommen wird, von der aus das betreffende Paket nach Massgabe der in ihm enthaltenen Zieladresse über einen adressengesteuerten Koppelschalter zunächst in eine Koppelspeicherzelle gelangt, die einer die durch die Zieladresse bezeichnete Anschlussleitung enthaltenden Gruppe von Anschlussleitungen gemeinsam zugeordnet ist, und wobei das Paket von der betreffenden Koppelspeicherzelle aus über zumindest eine weitere adressengesteuerte Koppelstufe zu der durch die Zieladresse bezeichneten Anschlussleitung durchgeschaltet wird.

Eine solche Weiterbildung der Erfindung erleichtert mit der Konzentration auf jeweils eine Mehrzahl von Anschlussleitungen zusammenfassenden, zyklisch abgetasteten Wartefeldern das Vermeiden von Mehrfachzugriffen, indem sie die Mehrfachzugriffssperre vom eigentlichen Hochgeschwindigkeits-Telekommunikationskern weg in einen Bereich niedrigerer Übertragungs- und Verarbeitungsgeschwindigkeiten hin vorverlegt; als Sperrprinzipien können dabei einfache Prinzipien angewendet werden wie z.B. das Anrufordnerprinzip oder sinngemäss das in den 50er Jahren gebräuchliche «selbstsperrende Prüfvielfach». Die Wartefelder ermöglichen dabei dennoch die Informationsvermittlung über den zentralen Telekommunikationskern mit entsprechend hoher Geschwindigkeit, wobei sich etwaige Wartezeiten oder Verluste in den Zubringerkreisen noch dadurch verringern lassen, dass in weiterer Ausgestaltung der Erfindung die Zugriffssteuereinheiten auch den Zugang ihrer Anschlussleitungen zu einem einer anderen Gruppe von Zugriffssteuereinheiten zugeordneten Wartefeldspeicher ermöglichen.

Anhand der Zeichnung sei die Erfindung noch näher erläutert. Dabei zeigt

Fig. 1 ein Ausführungsbeispiel eines Digital-Telekommunikationssystems gemäss der Erfindung;

Fig. 2 und Fig. 3 lassen schaltungstechnische Einzelheiten von Zugriffssteuereinheiten eines solchen Telekommunikationssystems erkennen.

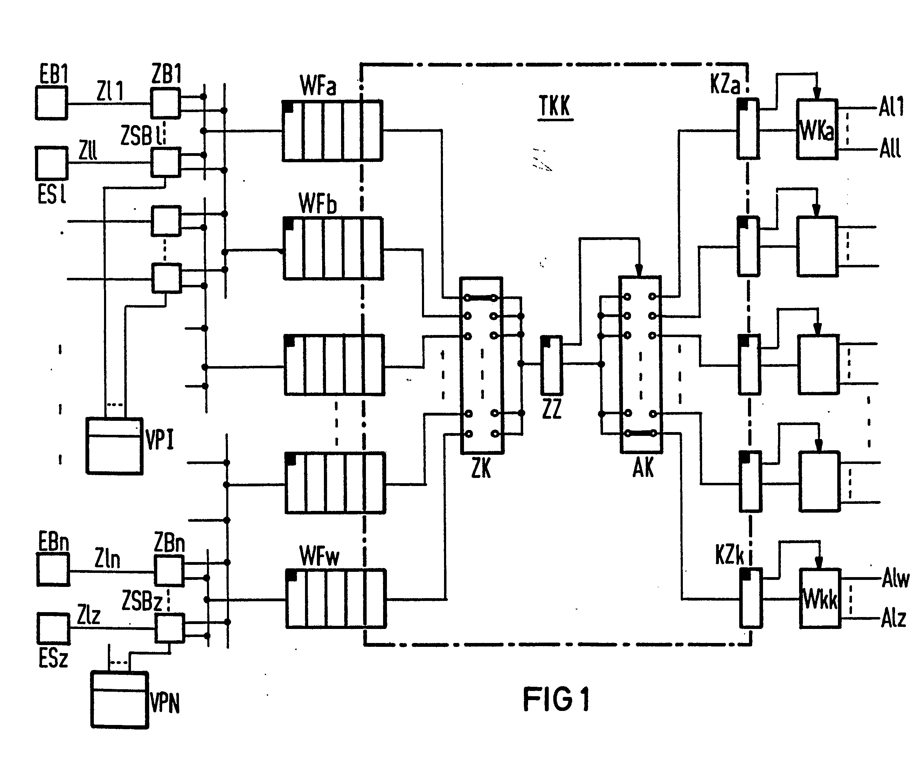

In der Zeichnung Fig. 1 ist schematisch in einem zum Verständnis der Erfindung erforderlichen Umfange ein Digital-Telekommunikationssystem gemäss der Erfindung dargestellt. Dieses Telekommunikationssystem weist an einem eine zentrale Vermittlung auf Anforderung ermöglichenden Vermittlungsknoten in einer Sternstruktur angeschlossene Anschlussleitungen auf, wobei diese Anschlussleitungen in Fig. 1 auf der einen Seite eines zentralen Telekommunikationskerns TKK des Vermittlungsknotens als Zubringerleitungen ZI1 ... ZIl; ...; ZIn ... ZIz und auf der anderen Seite als Abnehmerleitungen AI1 ... AIl; ...; AIn ... AIz dargestellt sind. Die Anschlussleitungen können dabei durch Teilnehmeranschlussleitungen des heute vorhandenen symmetrischen Teilnehmeranschlussnetzes gebildet sein, das immerhin für Bitraten bis zu ca. 2 Mbit/s geeignet ist; die einzelnen Anschlussleitungen können dabei auch mit zueinander unterschiedlichen Bitraten betrieben sein, z.B. mit 64 kbit/s, mit 2 Mbit/s und mit 4,8 kbit/s. Über die Anschlussleitungen sind an den Telekommunikationskern TKK sowohl Telekommunikationsgeräte EB1 ... EBn für auf Anforderung vermittelten Burst-Verkehr, beispielsweise Datenverarbeitungseinrichtungen und Büroarbeitsplatzgeräte, angeschlossen als auch Telekommunikationsgeräte ESI ... ESz für kanalvermittelten Stream-Verkehr, beispielsweise Telefon-, Text- und/oder Bildkommunikationsendgeräte. Bei dem zentralen Telekommunikationskern TKK des Vermittlungsknotens anschlussleitungsindividuell vorgesehene Zugriffssteuereinheiten ZB1 ... ZSBI; ...; ZBn ... ZSBz regeln den Zugriff der einzelnen Zubringerleitungen ZI zu dem zentralen Telekommunikationskern TKK:

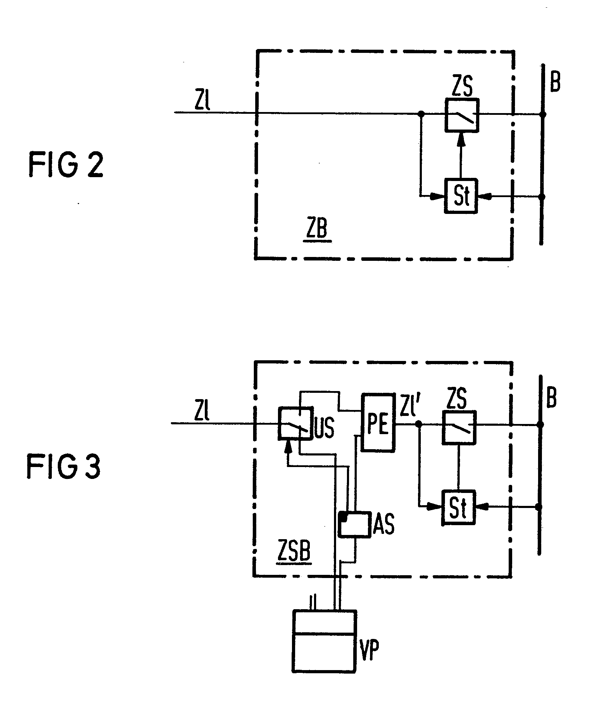

Dabei können die Telekommunikationsgeräte EB für auf Anforderung vermittelten Burst-Verkehr zugeordneten Zugriffssteuereinheiten ZB in einer für die Zugriffssteuerung in Local Area Networks (LAN) prinzipiell bekannten Weise ausgebildet sein; ein entsprechendes Prinzipschaltbild zeigt Fig. 2: Die Zugriffssteuereinheit ZB bewirkt den Zugang der Zubringerleitung ZI zu einer einer Mehrzahl von Zubringerleitungen gemeinsamen Busleitung B mit Hilfe einer Zugriffsschalteinrichtung ZS, die von einer die Signalzustände auf der Zubringerleitung ZI und auf der Busleitung B auswertenden Steuereinrichtung St entsprechend gesteuert wird.

Es sei in diesem Zusammenhang bemerkt, dass wegen der räumlichen Konzentration der Zugriffssteuereinheiten ausser den aus der LAN-Technik bekannten Zugriffsverfahren auch andere Möglichkeiten der Zugriffsregelung zur Anwendung kommen können, wie dies oben bereits erwähnt wurde.

Im Unterschied zu den Zugriffssteuereinheiten ZB, die Telekommunikationsgeräten EB für auf Anforderung vermittelten Burst-Verkehr zugeordnet sind und die jeweils von vornherein den Zugang dieser Telekommunikationsgeräte zu dem zentralen Telekommunikationskern bewirken, eröffnen in dem in Fig. 1 skizzierten Digital-Telekommunikationssystem gemäss der Erfindung die Telekommunikationsgeräten ES für kanalvermittelten Stream-Verkehr zugeordneten Zugriffssteuereinheiten ZSB – davon ausgehend, dass diese Telekommunikationsgeräte ES keine jeweils auch Zieladressen und ggf. Diensteinformationen enthaltenden Nachrichtenpakete liefern –, zunächst noch keinen Zugang zum Telekommunikationskern TKK. Die Telekommunikationsgeräten ES für kanalvermittelten Stream-Verkehr zugeordneten Zugriffssteuereinheiten ZSB bewirken vielmehr zunächst, zu Beginn einer Verbindung, einen Zugang der jeweiligen Anschlussleitung ZI zu einem Vermittlungsprozessor VPI ... VPN, der die von dem jeweiligen Telekommunikationsgerät ES zu Beginn der betreffenden Verbindung abgegebenen Dienste- und Zielinformationen auswertet und die in eine für eine Vermittlung auf Anforderung geeignete Form umgewertete Zielinformation an die betreffende Zugriffssteuereinheit ZSB zurückgibt, wo die umgewertete Zielinformation abgespeichert wird; erst danach bewirkt die Zugriffssteuereinheit ZSB dann den Zugang der betreffenden Anschlussleitung ZI zum zentralen Telekommunikationskern TKK, über den die Verbindung dann nach Massgabe der umgewerteten Zielinformation vermittelt wird.

Wie dazu die in Fig. 2 skizzierte Zugriffssteuereinheit ergänzt sein kann, zeigt das Prinzipschaltbild in Fig. 3: In der in Fig. 3 skizzierten Zugriffssteuereinheit ZSB ist die Anschlussleitung ZI zunächst für Ziel- und ggf. auch Diensteinformationen über eine Umsteuereinrichtung US mit dem Ein-/Ausgabeteil eines Vermittlungsprozessors VP verbunden, so dass dieser im Zuge eines Verbindungsaufbaus von einem Telekommunikationsgerät für kanalvermittelten Stream-Verkehr her über die Anschlussleitung ZI eintreffende Ziel- und ggf. auch Diensteinformationen aufnimmt, um sie anschliessend in eine für die Vermittlung auf Anforderung geeignete Form umzuwerten. Mit dem Ein-/Ausgabeteil des Vermittlungsprozessors VP ist ausserdem ein Adressenspeicher AS der Zugriffssteuereinheit ZSB verbunden, in dem die ausgewertete Zielinformation dann gespeichert wird. Wie auch in Fig. 3 angedeutet ist, kann die Umsteuereinrichtung US vom Adressenspeicher AS her steuerbar sein, so dass jedenfalls nach Eingabe der umgewerteten Zielinformation in den Adressenspeicher AS über die Anschlussleitung ZI ankommende, Nutzinformationen darstellende Digitalsignale zu einem Eingang einer im Prinzip mit einer taktgesteuerten Schieberegisterschaltung zu realisierenden Paketierungseinrichtung PE gelangen, die eingangsseitig ausserdem mit dem Ausgang des Adressenspeichers AS verbunden ist. Ohne dass dies in Fig. 3 noch dargestellt ist, können dabei auch etwaige weitere über die Anschlussleitung ZI (etwa in einem gesonderten Signalisierungskanal) ankommende Signalisierungsinformationen über die Umsteuereinrichtung US auch weiterhin zum Vermittlungsprozessor VP bzw. zum Adressenspeicher AS gelangen; des weiteren können in einen solchen Adressenspeicher auch von einem Vermittlungsprozessor oder auch von einem zentralen Vermittlungssteuerwerk aus dem Vermittlungsprozess heraus erarbeitete Signalisierungsinformationen, insbesondere auch Zielinformationen, eingegeben werden, ohne dass dies noch in Fig. 3 dargestellt ist. Die Paketierungseinrichtung PE bildet aus den über die Anschlussleitung ZI ankommenden Digitalsignalen jeweils unter Hinzufügung der vom Adressenspeicher AS gelieferten Zielinformation für die Weitervermittlung auf Anforderung geeignete Nachrichtenpakete, die sie über ihre Ausgangsleitung ZI' weitergibt. Die auf der Leitung ZI' auftretenden Nachrichtenpakete können dann über eine nachfolgende, von einer Steuereinrichtung St gesteuerte Zugriffsschalteinrichtung ZS zu einer einer Mehrzahl von Zubringerleitungen gemeinsamen Busleitung B in einer den oben anhand von Fig. 2 erläuterten Vorgängen entsprechenden Weise weitergeschaltet werden, ohne dass dies hier nochmals erläutert werden müsste.

Um nun wieder auf Fig. 1 zurückzukommen, so bilden die dort vorgesehenen, jeweils von einer Mehrzahl von Zugriffssteuereinheiten ZB1; ... ZSBI; ...; ZBn ... ZSBz erreichbaren Busleitungen die Eingangsleitungen von jeweils eine Mehrzahl von Speicherzellen aufweisenden Wartefeld-Speichern WFa, WFb; ... WFw. In dem Telekommunikationssystem gemäss Fig. 1 geschieht daher die Regelung des Zugriffs der Anschlussleitungen zum zentralen Telekommunikationskern TKK in der Weise, dass zunächst die beim Telekommunikationskern zubringerleitungsindividuell vorgesehenen, ebenso wie die Zubringerleitungen ZI1 ... ZII; ...; ZIn ... ZIz in Gruppen unterteilten Zugriffssteuereinheiten ZB1 ... ZSBI; ...; ZBn ... ZSBz nur den Zugang ihrer jeweiligen Anschlussleitung zu wenigstens einem der betreffenden Gruppe gemeinsam zugeordneten, jeweils eine Mehrzahl von Speicherzellen aufweisenden Wartefeld-Speicher WFa; ...; WFw regeln. Auf den Zubringerleitungen ZI1 ... ZII einer Zubringerleitungsgruppe in Richtung zum zentralen Telekommunikationskern übertragene Digitalsignale werden somit mit Hilfe der zugehörigen Zugriffssteuereinheiten, im Beispiel der Zugriffssteuereinheiten ZB1 ... ZSBI, jeweils mit der zugehörigen Zieladresse zu einem Paket zusammengefasst, in der Reihenfolge des Auftretens der einzelnen Pakete zunächst in den jeweils in Frage kommenden Wartefeld-Speicher, beispielsweise in den Wartefeld-Speicher WFa, eingegeben.

Geht man davon aus, dass beispielsweise über eine 2-Mbit/s-Zubringerleitung ZI (in Fig. 1) bzw. ZI' (in Fig. 3) etwa alle 8 µs ein 16-bit-Paket ankommen kann und dass die Übertragung dieses Paketes in einer demgegenüber wesentlich kürzeren Zeitspanne von z.B. 1 µs vollzogen wird, so kann bei Anwendung eines entsprechend schnellen Zugriffsverfahrens im Beispiel eine Gruppe von bis zu 8 Zubringerleitungen (ZI1 ... ZLL) auf ein Wartefeld (WFa) geschaltet sein, das dazu mit einer Bitdurchsatzrate von im Beispiel 16 Mbit/s betrieben wird. Wartezeiten oder Verluste kann man im übrigen herabsetzen, wenn, wie dies in der Zeichnung zusätzlich angedeutet ist, die Zugriffssteuereinheiten ZB1 ... ZSBI ein und derselben Gruppe von Zugriffssteuereinheiten ebenso wie den Zugang ihrer Anschlussleitungen zu dem dieser Gruppe zugeordneten Wartefeld-Speicher WFa auch den Zugang ihrer Anschlussleitungen zu einem einer anderen Gruppe von Anschlussleitungen bzw. Zugriffssteuereinheiten zugeordneten Wartefeld-Speicher, im Beispiel dem Wartefeld-Speicher WFb, regeln, wobei entsprechendes auch für die übrigen Gruppen von Anschlussleitungen ZI und Zubringersteuereinheiten ZB, ZSB gilt.

Ausgangsseitig werden die Wartefeld-Speicher WFa ... WFw mit Hilfe eines zyklisch betriebenen Koppelschalters ZK zyklisch abgefragt, wobei jeweils eines der im gerade abgefragten Wartefeld-Speicher WF enthaltenen Pakete vorzugsweise in Paralleldarstellung in eine zentrale Paketspeicherzelle ZZ übernommen wird. Die zentrale Paketspeicherzelle ZZ ist ausgangsseitig über einen adressiert steuerbaren Koppelschalter AK mit Koppelspeicherzellen KZa; ...; KZk verbindbar, die jeweils einer Gruppe von Abnehmerleitungen AI1 ... AII; ...; AIn ... AIz zugeordnet sind. Wie auch in der Zeichnung angedeutet ist, wird dabei der Koppelschalter AK durch die Zieladresse des jeweils in der Paketspeicherzelle ZZ befindlichen Pakets gesteuert, so dass das betreffende Paket, vorzugsweise wiederum in Paralleldarstellung, nach Massgabe seiner Zieladresse über den Koppelschalter AK gerade in diejenige Koppelspeicherzelle, beispielsweise die Koppelspeicherzelle KZk, gelangt, die der die durch die Zieladresse bezeichnete Abnehmerleitung, beispielsweise die Abnehmerleitung AIz, enthaltenden Abnehmerleitungsgruppe AIn ... AIz zugeordnet ist.

Die Koppelspeicherzellen KZa ... KZk sind ihrerseits ausgangsseitig über mindestens eine weitere Stufe adressengesteuerter Koppeleinrichtungen WKa ... WKk mit den einzelnen Abnehmerleitungen AI der jeweiligen Gruppe von Abnehmerleitungen verbindbar. Wie auch in der Zeichnung angedeutet ist, wird dabei die jeweilige Koppeleinrichtung, beispielsweise die Koppeleinrichtung WKk, durch die Zieladresse des gerade betrachteten, im Beispiel in die Koppelspeicherzelle KZk gelangten Pakets gesteuert, so dass das betreffende Paket schliesslich, nunmehr wieder in Seriendarstellung, zu der durch die Zieladresse bezeichneten Abnehmerleitung, im Beispiel zu der Abnehmerleitung AIz, durchgeschaltet wird. Danach können die in den durchgeschalteten Nachrichtenpaketen enthaltenen Nutzsignale wieder – ggf. unter Berücksichtigung einer gegebenen Zeitmultiplex-Kanalverschachtelung etwa an Hand zusätzlicher Herkunftsadressen – in einen einem Stream-Verkehr entsprechenden Bitstrom umgeformt werden, was hier jedoch nicht mehr betrachtet werden soll.

Die Paketdurchschaltung erfordert dabei nur in dem in der Zeichnung strichpunktiert umrissenen Hochgeschwindigkeitskern TKK eine hohe Bitdurchsatzrate von beispielsweise (bei w = 100 Anschlussleitungstruppen und Wartefeldern) 1600 Mbit/s, während man zwischen den Zubringerleitungen ZI und den Wartefeldern WF und ebenso zwischen den Koppelspeicherzellen KZ und den Abnehmerleitungen AI mit den oben genannten niedrigeren Bitraten auskommt.

Abschliessend sei noch bemerkt, dass in der Zeichnung lediglich räumlich voneinander getrennte Anschlussleitungen dargestellt sind, dass in der Realisierung statt solcher durch räumlich voneinander getrennte Anschlussleitungen gegebener Übertragungskanäle aber auch durch Zeitkanäle von im Zeitmultiplex ausgenutzten Anschlussleitungen gegebene Übertragungskanäle vorgesehen sein können.

## Patentansprüche

1. Digital-Telekommunikationssystem mit Sternstruktur seiner Anschlussleitungen und mit zentraler Vermittlung auf Anforderung, unter Verwendung von den Zugriff der einzelnen Anschlussleitungen (ZI) zu einem zentralen Telekommunikationskern (TKK) regelnden, beim Telekommunikationskern teilnehmerindividuell vorgesehenen Zugriffssteuereinheiten (ZB, ZSB), dadurch gekennzeichnet, dass an ein und denselben Telekommunikationskern (TKK) sowohl Telekommunikationsgeräte (EB) für auf Anforderung vermittelten Burst-Verkehr als auch Telekommunikationsgeräte (ES) für kanalvermittelten Stream-Verkehr jeweils über eine eigene Anschlussleitung (ZI) mit einer beim Telekommunikationskern (TKK) anschlussleitungsindividuell vorgesehenen Zugriffssteuereinheit (ZB; ZSB) angeschlossen sind, wobei die den Telekommunikationsgeräten (ES) für Stream-Verkehr zugeordneten Zugriffssteuereinheiten (ZSB) zunächst den Zugang der jeweiligen Anschlussleitung (ZI) zu einem Vermittlungsprozessor (VP) bewirken, der von dem Telekommunikationsgerät (ES) abgegebene Dienste- und Zielinformationen auswertet und die entsprechend umgewerteten Zielinformationen an die betreffende Zugriffssteuereinheit (ZSB) zurückgibt, woraufhin die Zugriffssteuereinheit (ZSB) den Zugang der betreffenden Anschlussleitung (ZI) zu dem eigentlichen Telekommunikationskern (TKK) bewirkt, über den die Verbindung dann nach Massgabe der umgewerteten Zielinformation vermittelt wird.

2. Telekommunikationssystem nach Anspruch 1, dadurch gekennzeichnet, dass die Zugriffssteuereinheiten (ZB1 ... ZSBz) jeweils in Gruppen (ZB1 ... ZSBl; ...; ZBn ... ZSBz) unterteilt den Zugang ihrer Anschlussleitungen (ZI1 ... ZIl; ...; ZIn ... ZIz) zu wenigstens einem der betreffenden Gruppe von Zugriffssteuereinheiten (ZB1 ... ZSBl) gemeinsam zugeordneten, jeweils eine Mehrzahl von Wartefeld-Speicherzellen aufweisenden Wartefeld-Speicher (WFa) regeln, dass im Zuge einer zyklischen Abfrage der Wartefeld-Speicher (WFa ... WFw) über einen zyklisch betriebenen Koppelschalter (ZK) jeweils eines der im jeweiligen Wartefeld-Speicher (WF) enthaltenen Pakete in eine zentrale Paketspeicherzelle (ZZ) übernommen wird, von der aus das betreffende Paket nach Massgabe der in ihm enthaltenen Zieladresse über einen adressengesteuerten Koppelschalter (AK) zunächst in eine Koppelspeicherzelle (KZa ... KZk) gelangt, die einer die durch die Zieladresse bezeichnete Anschlussleitung (AI1 ... AIz) enthaltenden Gruppe (AI1 ... AIl; ...; AIn ... AIz) von Anschlussleitungen gemeinsam zugeordnet ist, und dass das Paket von der betreffenden Koppelspeicherzelle (KZa ... KZk) aus über zumindest eine weitere adressengesteuerte Koppelstufe (WKa ... WKk) zu der durch die Zieladresse bezeichneten Anschlussleitung (AI) durchgeschaltet wird.

3. Telekommunikationssystem nach Anspruch 2, dadurch gekennzeichnet, dass die Zugriffssteuereinheiten (ZB1 ... ZSBl) auch den Zugang ihrer Anschlussleitungen (ZI1 ... ZIl) zu einem einer anderen Gruppe von Zugriffssteuereinheiten zugeordneten Wartefeld-Speicher (WFb) regeln.

**Revendications**

1. Système de télécommunication numérique comportant des lignes de raccordement disposées selon une structure en étoile et mettant en œuvre une commutation centrale sur demande, moyennant l'utilisation d'unités de commande d'accès (par exemple ZSB), qui règlent l'accès des différentes lignes d'abonnés (ZI) à un noyau central de télécommunication (TKK), et sont prévues individuellement pour chaque abonné dans le noyau de télécommunication, caractérisé par le fait qu'aussi bien des appareils de télécommunication (EB) pour un trafic en rafales commuté sur demande que des appareils de télécommunication (ES) prévus pour un trafic en continu avec commutation des canaux sont raccordés à un même noyau de télécommunication (TKK) respectivement par l'intermédiaire d'une ligne de raccordement particulière (ZI) comportant une unité de commande d'accès (ZB; ZSB) prévue pour chaque ligne de raccordement dans le cas du noyau de télécommunications (TKK), les unités de commande d'accès (ZSB) associées aux appareils de télécommunication (ES) pour le trafic en continu réalisant tout d'abord l'accès à la ligne de raccordement respective (ZI) aboutissant à un processeur de commutation (VB), qui évalue des informations de service et des informations de destination délivrées par l'appareil de télécommunication (ES) et renvoie les informations de destination, converties de façon correspondante, à l'unité considérée de commande d'accès (ZSB), à la suite de quoi cette unité de commande d'accès (ZSB) réalise l'accès de la ligne de raccordement considérée (Zn) au noyau de communication (TKK) proprement dit, par l'intermédiaire duquel la liaison est alors commutée en fonction de l'information de destination convertie.

2. Système de télécommunication suivant la revendication 1, caractérisé par le fait que les unités de commande d'accès (ZB1 ... ZSBz) règlent, en étant respectivement réparties en groupe (ZB1 ... ZSBl; ...; ZBn ... ZSBz), l'accès de leurs lignes de raccordement (ZI1 ... ZIl; ...; ZIn ... ZIz) à au moins une mémoire de zones d'attente (WFa) associée en commun au groupe considéré d'unités de commande d'accès (ZB1 ... ZSBl) et comportant respectivement une multiplicité de cellules de mémoire de zones d'attente, qu'au cours d'une interrogation cyclique des mémoires de zones d'attente (WFa ... WFw) par l'intermédiaire d'un commutateur de couplage (ZK) fonctionnant de façon cyclique, respectivement l'un des paquets contenus dans la mémoire respective de zones d'attente (WF) est transféré dans une cellule centrale de mémoire de paquets (ZZ), d'où le paquet considéré parvient tout d'abord, en fonction de l'adresse de destination qu'il contient et par l'intermédiaire d'un commutateur de couplage (AK) commandé par cette adresse, dans une cellule de mémoire de couplage (KZa ... KZk), qui est associée à un groupe (AI1 ... AIl; ...; AIn ... AIz) de lignes de raccordement, qui contient une ligne de raccordement (AI1 ... AIz) désignée par l'adresse de destination, et que le paquet est transféré directement de la cellule considérée de mémoire de couplage (KZa ... KZk), par l'intermédiaire d'au moins un autre étage de couplage (WKa ... WKk) commandé par l'adresse, à la ligne de raccordement (AI) désignée par l'adresse de destination.

3. Système de télécommunication suivant la revendication 2, caractérisé par le fait que les unités de commande d'accès (ZB1 ... ZSBl) règlent également l'accès de leurs lignes de raccordement (ZI1 ... ZIl) à une mémoire de zones d'attente (WFb) associée à un autre groupe de l'unité de commande d'accès.

**Claims**

1. A digital telecommunications system with a star structure of its connection lines and with central switching on request, using access control units (ZB, ZSB) which control the access of the individual connection lines (ZI) to a central telecommunications core (TKK) and which are provided individually for each subscriber at the telecommunications core, characterised in that one and the same telecommunications core (TKK) is connected both to telecommunications devices (EB) for burst traffic switched on request and to telecommunications devices (ES) for channel-switched stream traffic, in each case via an individual connection line (ZI) with an access control unit (ZB; ZSB) provided individually for each connection line at the telecommunications core (TKK), where the access control units (ZSB) which are assigned to the telecommunications devices (ES) for stream traffic firstly provide the respective connection line (ZI) with access to a switching processor (VP) which analyses items of service and target information emitted from the telecommunications device (ES) and returns the appropriately-converted items of target information to the respective access control unit (ZSB), whereupon the access control unit (ZSB) provides the respective connection line (ZI) with access to the actual telecommunications core (TKK) via which the connection is then switched through in accordance with the converted target information.

2. A telecommunications system as claimed in claim 1, characterised in that the access control units (ZB1 ... ZSBz) in each case sub-divided into groups (ZBl ... ZSBl; ...; ZBn ... ZSBz), control the access of their connection lines (ZI1 ... ZIl; ...; ZIn ... ZIz) to at least one queuing field store (WFa) which is commonly assigned to the respective group of access control units (ZBl ... ZSBl) and which in each case comprises a plurality of queuing field storage cells, that in the course of a cyclic interrogation of the queuing field stores (WFa ... WFw), via a cyclically operated coupling switch (ZK) in each case one of the packets located in the respective queuing field store (WF) is transferred into a central packet storage cell (ZZ) from which the respective packet is firstly forwarded, in accordance with the target address which it contains, via an addresscontrolled coupling switch (AK) to a coupling storage cell (KZa ... KZk) which is commonly assigned to a group of connection lines (AI1 ... AIl; ...; AIn ... AIz) containing the connection line (AI1 ... AIz) designated by the target address, and that the packet is switched through from the respective coupling storage cell (KZa ... KZk) via at least one further addresscontrolled coupling stage (WKa ... WKk) to the connection line (AI) designated by the target address.

3. A telecommunications system as claimed in claim 2, characterised in that the access control units (ZB1 ... ZSBl) also control the access of their connection lines (ZI1 ... ZIl) to a queuing field store (WFb) assigned to another group of access control units.

FIG 1

FIG 2

FIG 3